# EUROPÄISCHE PATENTSCHRIFT

(11) **EP 0 802 043 B1**
(45) Veröffentlichungstag und Bekanntmachung des Hinweises auf die Patenterteilung: **04.12.2002**
(21) Anmeldenummer: 97105903.5
(22) Anmeldetag: 10.04.1997
(51) Int. Cl.: B32B 5/28, B29C 70/08

(54) **Biegesteifer Faserverbundwerkstoff**
Fiber reinforced material having high bending stiffness
Matériau composite renforcé par des fibres, rigide en flexion

(30) Priorität: 19.04.1996 DE 29607085 U
(43) Veröffentlichungstag der Anmeldung: 22.10.1997
(73) Patentinhaber: Quadrant Plastic Composites AG, 5600 Lenzburg (CH)
(72) Erfinder: Ittemann, Peter, 68623 Lampertheim (DE); Brentrup, Karl-Ludwig, 49504 Lotte (DE); Dittmar, Harri, 67271 Battenberg (DE)
(74) Vertreter: Patentanwälte Zellentin & Partner

(56) Entgegenhaltungen:
- EP-A- 0 323 571
- EP-A- 0 697 275
- GB-A- 1 370 787

## Beschreibung

Die Erfindung betrifft einen biegesteifen, flächigen Verbundwerkstoff mit einer Dicke von 1,2 bis 5 mm, bestehend aus einer Thermoplastmatrix und Verstärkungsfasern.

Flächige Verbundwerkstoffe aus einer Thermoplastmatrix und darin eingelagerten Verstärkungsfasern, z.B. in Form von Fasermatten, Fasergelegen und Fasergeweben sind bekannt. Bei Verwendung von Verstärkungsgeweben erhält man besonders biegesteife Verbundwerkstoffe, die jedoch umso teurer werden, je höher das Flächengewicht der eingesetzten Glasfasergewebe ist. Für den Einsatz im Automobilbau, insbesondere zur Herstellung spezieller Karosserieteile werden - in Konkurrenz zu Aluminium - Verbundwerkstoffe benötigt, die kostengünstig sind, eine hohe Biegesteifigkeit aufweisen und ein niedriges Flächengewicht haben.

Derartige Verbundwerkstoffe sind in der EP-A 697 275 beschrieben. Sie bestehen vorzugsweise aus zwei Außenschichten aus Glasfasergewebe und zwei Innenschichten aus Glasfasermatten, wobei jeweils eine Außenschicht mit einer Innenschicht vernadelt ist. Diese bekannten Verbundwerkstoffe weisen jedoch eine verhältnismäßig unebene Oberfläche auf.

Der Erfindung lag also die Aufgabe zugrunde, einen billigen Verbundwerkstoff mit hoher Biegesteifigkeit, einem niedrigen Flächengewicht und einer ebenen Oberfläche bereitzustellen.

Diese Aufgabe wurde durch den in Anspruch 1 definierten Verbundwerkstoff gelöst.

Dieser hat eine Dicke von 1,2 bis 5, vorzugsweise von 1,2 bis 4,5 mm und ein Flächengewicht von vorzugsweise 1700 bis 6100 g·m⁻². Er besteht aus einer Thermoplastmatrix und Verstärkungsfasern. Als Thermoplaste kommen grundsätzlich alle bei erhöhter Temperatur schmelzbaren Kunststoffe in Frage. Bevorzugt sind Polyamide und Polyester, sowie insbesondere Polypropylen.

Die Verstärkungsfasern sind in der Schichtenfolge A B C C B A angeordnet. Die Schichten A und C bestehen aus Glasfasermatten, deren Flächengewicht zwischen 50 und 800 g·m⁻², insbesondere zwischen 60 und 500 g·m⁻², beträgt. Die Fasermatten können aus geschnittenen Rovings mit einer Länge von 25 bis 100 mm oder aus Endlosfasern bestehen.

Die Schichten B bestehen aus Fasergewebe mit einem Flächengewicht von 100 bis 1200 g·m⁻², insbesondere von 200 bis 900 g·m⁻². Es sind übliche Gewebe verwendbar, bei denen Endlosfasern in zwei oder mehr Vorzugsrichtungen orientiert sind. Es können entweder reine Glasfasergewebe eingesetzt werden oder sogenannte Hybridgewebe, bei denen bis zu 50 Gew.-% der Glasfasern durch Thermoplastfasern ersetzt sind.

Bei einer bevorzugten Ausführungsform der Erfindung sind als Außenschichten weitere Schichten X bzw. X' angeordnet, die aus Glasfaservlies, vorzugsweise mit einem Flächengewicht von 10 bis 50 g·m⁻² bestehen. Die Abbildung zeigt einen entsprechenden bevorzugten Schichtaufbau.

Das Gewichtsverhältnis Thermoplastmatrix zu Verstärkungsfasern beträgt 80:20 bis 35:65, wobei gegebenenfalls in den Geweben enthaltene Thermoplastfasern zu der Thermoplastmatrix gerechnet sind, da sie bei der Herstellung des Verbundwerkstoffes aufschmelzen.

Der erfindungsgemäße Verbundwerkstoff kann hergestellt werden, indem man
a) auf einem Transportband erst geschnittene Rovings oder Endlosfasern zu einer Wirrfasermatte ablegt, darauf ein Glasfasergewebe zuführt und schließlich darauf noch einmal Rovings bzw. Endlosfasern ablegt,
b) das Fasergelege vernadelt,
c) zwei solcher Faserverbunde zusammenführt,
d) je einen Thermoplast-Schmelzestrom zwischen die beiden Faserverbunde sowie an deren Außenseiten führt,
e) gegebenenfalls an den Außenseiten Faservliese zuführt,
f) Thermoplastschmelze und Faserschichten so miteinander verpreßt, daß die Fasern vollständig mit der Schmelze durchtränkt werden, und
g) den Verbund abkühlt und verfestigt.

Das Vernadeln kann auf üblichen Nadelstühlen mit üblichen Filznadeln vorgenommen werden. Die Einstichzahl kann in weiten Grenzen zwischen 10 und 200 Einstichen pro cm² schwanken, bevorzugt liegt sie zwischen 20 und 100. Durch die Nadelung werden die Fasermatten mit den Fasergeweben verbunden, so daß integere Faserverbunde entstehen. Außerdem werden durch die Nadelung einige Glasfasern, insbesondere auch in dem Fasergewebe gebrochen, und Glasfaserbündel werden zerteilt, was die Tränkung mit der Thermoplastschmelze erheblich erleichtert.

Die Thermoplast-Schmelzeströme im Schritt d) können durch einen Extruder mit drei parallelen Breitschlitzdüsen erzeugt werden. Grundsätzlich ist es auch möglich, statt der beiden äußeren Schmelzeströme Thermoplastfolien zuzuführen, die dann im Schritt f) aufgeschmolzen werden.

Das verpressen, Tränken und Verfestigen der Schritte f) und g) wird vorzugsweise auf einer Doppelbandpresse - wie z.B. in DE-B 29 48 235 beschrieben - durchgeführt.

Man kann das erfindungsgemäße Verbund-Halbzeug auch mit konventionellem Halbzeug auf Basis von glasmattenverstärkten Thermoplasten kombinieren und beide Halbzeuge zusammen verpressen, um z.B. mechanisch hochbelastbare Bauteile herzustellen.

Die erfindungsgemäßen Faserverbundwerkstoffe können durch Pressen und Stanzen thermoplastisch verformt und zu Automobilteilen, z.B. Bodenblechen, Heckklappen, Montageträgern, Sitzstrukturen, Stoßfängerträgern, Instrumententafelträgern, Motorabdeckungen oder Motorkapseln verarbeitet werden.

Die in den Beispielen genannten Teile und Prozente beziehen sich auf das Gewicht.

### Beispiele

### Beispiel 1:

Es wird das folgende textile Flächengebilde aufgebaut:
- 1. Lage: Geschnittene Glasfasern mit einer Feinheit von 2400 tex und einem Flächengewicht von 235 g/m² (A).
- 2. Lage: Glasfasergewebe mit 600 g/m² Flächengewicht, (B).
- 3. Lage: Geschnittene Glasfasern mit einer Feinheit von 2400 tex und einem Flächengewicht von 235 g/m² (C=A).

5 Dieses textile Flächengebilde wird durch eine Nadelmaschine geführt und mit einer Einstichzahl von 50 Einstichen/cm² bei einer Einstichtiefe von 9 mm und einem Durchgang von 11 mm zusammengenadelt. Der Vorschub betrug 11 mm/Hub.

Es entsteht ein Flächengebilde mit 1070 g/m² Flächengewicht und einer Lagenabfolge A/B/C. Der Anteil der Fasergewebelage B am Gesamtflächengebilde beträgt 56 %.

Zwei solcher Flächengebilde werden dann zwischen 3 Schmelzeschichten aus Polypropylen, die aus einem Extruder über Breitschlitzdüsen verteilt werden geführt, in der Heizpreßzone einer Doppelbandpresse getränkt und anschließend unter Druck durch Abkühlung fixiert. Das Halbzeug ist 4,1 mm dick und hat einen Glasgehalt von 42 Gew.-% und ein Gesamtflächengewicht von 5100 g/m².

### Beispiel 2:

Es wird das folgende textile Flächengebilde aufgebaut:
- 1. Lage: Geschnittene Glasfasern mit einer Feinheit von 2400 tex und einem Flächengewicht von 75 g/m² (A).
- 2. Lage: Glasfasergewebe mit 340 g/m² Flächengewicht, (B).
- 3. Lage: Geschnittene Glasfasern mit einer Feinheit von 2400 tex und einem Flächengewicht von 75 g/m² (C=A).

Dieses textile Flächengebilde wird durch eine Nadelmaschine geführt und mit einer Einstichzahl von 50 Einstichen/cm² bei einer Einstichtiefe von 7 mm und einem Durchgang von 9 mm zusammengenadelt. Der Vorschub betrug 11 mm/Hub.

Es entsteht ein Flächengebilde mit 490 g/m² Flächengewicht und einer Lagenabfolge A/B/C. Der Anteil der Fasergewebelage B am Gesamtflächengebilde beträgt 69 %.

Zwei solcher Flächengebilde werden dann zwischen 3 Schmelzeschichten aus Polypropylen, die aus einem Extruder über Breitschlitzdüsen verteilt werden geführt, in der Heizpreßzone einer Doppelbandpresse getränkt und anschließend unter Druck durch Abkühlung fixiert. Das Halbzeug ist 2 mm dick und hat einen Glasgehalt von 40 Gew.-% und ein Gesamtflächengewicht von 2450 g/m².

### Beispiel 3:

Es wird das folgende textile Flächengebilde aufgebaut:
- 1. Lage: Geschnittene Glasfasern mit einer Feinheit von 2400 tex und einem Flächengewicht von 165 g/m² (A).
- 2. Lage: Glasfasergewebe mit 600 g/m² Flächengewicht, (B).
- 3. Lage: Geschnittene Glasfasern mit einer Feinheit von 2400 tex und einem Flächengewicht von 165 g/m² (C=A).

Dieses textile Flächengebilde wird durch eine Nadelmaschine geführt und mit einer Einstichzahl von 50 Einstichen/cm² bei einer Einstichtiefe von 9 mm und einem Durchgang von 11 mm zusammengenadelt. Der Vorschub betrug 11 mm/Hub.

Es entsteht ein Flächengebilde mit 930 g/m² Flächengewicht und einer Lagenabfolge A/B/C. Der Anteil der Fasergewebelage B am Gesamtflächengebilde beträgt 65 %.

Zwei solcher Flächengebilde werden dann zwischen 3 Schmelzeschichten aus Polypropylen, die aus einem Extruder über Breitschlitzdüsen verteilt werden geführt, in der Heizpreßzone einer Doppelbandpresse getränkt und anschließend unter Druck durch Abkühlung fixiert. Das Halbzeug ist 3,8 mm dick und hat einen Glasgehalt von 40 Gew.-% und ein Gesamtflächengewicht von 4650 g/m².

### Beispiel 4:

Es wird das folgende textile Flächengebilde aufgebaut:
- 1. Lage: Geschnittene Glasfasern mit einer Feinheit von 2400 tex und einem Flächengewicht von 200 g/m² (A).
- 2. Lage: Glasfasergewebe mit 800 g/m² Flächengewicht, (B).
- 3. Lage: Geschnittene Glasfasern mit einer Feinheit von 2400 tex und einem Flächengewicht von 500 g/m² (C).

Dieses textile Flächengebilde wird durch eine Nadelmaschine geführt und mit einer Einstichzahl von 50 Einstichen/cm² bei einer Einstichtiefe von 10 mm und einem Durchgang von 13 mm zusammengenadelt. Der Vorschub betrug 11 mm/Hub.

Es entsteht ein Flächengebilde mit 1500 g/m² Flächengewicht und einer Lagenabfolge A/B/C. Der Anteil der Fasergewebelage B am Gesamtflächengebilde beträgt 53 %.

Zwei solcher Flächengebilde werden dann zwischen 3 Schmelzeschichten aus Polypropylen, die aus einem Extruder über Breitschlitzdüsen verteilt werden geführt, in der Heizpreßzone einer Doppelbandpresse getränkt und anschließend unter Druck durch Abkühlung fixiert. Hierbei ist darauf zu achten, daß die Lagen C und C' mit je 500 g/m² in der Mitte zu liegen kommen. Das Halbzeug ist 4,5 mm dick und hat einen Glasgehalt von 50 Gew.-% und ein Gesamtflächengewicht von 6000 g/m².

### Beispiel 5:

Es wird das folgende textile Flächengebilde aufgebaut:
- 1. Lage: Geschnittene Glasfasern mit einer Feinheit von 2400 tex und einem Flächengewicht von 235 g/m² (A).
- 2. Lage: Glasfasergewebe mit 800 g/m² Flächengewicht, (B).
- 3. Lage: Geschnittene Glasfasern mit einer Feinheit von 2400 tex und einem Flächengewicht von 235 g/m² (C=A).

Dieses textile Flächengebilde wird durch eine Nadelmaschine geführt und mit einer Einstichzahl von 50 Einstichen/cm² bei einer Einstichtiefe von 10 mm und einem Durchgang von 12 mm zusammengenadelt. Der Vorschub betrug 11 mm/Hub.

Es entsteht ein Flächengebilde mit 1270 g/m² Flächengewicht und einer Lagenabfolge A/B/C. Der Anteil der Fasergewebelage B am Gesamtflächengebilde beträgt 63 %.

Zwei solcher Flächengebilde werden dann zwischen 3 Schmelzeschichten aus Polypropylen, die aus einem Extruder über Breitschlitzdüsen verteilt werden geführt. Je eine Lage (X) eines Glasvlieses mit 30 g/m² wird an den Außenseiten aufgebracht und dann dieses Gebilde in der Heizpreßzone einer Doppelbandpresse getränkt und anschließend unter Druck durch Abkühlung fixiert. Das Halbzeug ist 3,8 mm dick und hat einen Glasgehalt von 50 Gew.-% und ein Gesamtflächengewicht von 5080 g/m².

### Beispiel 6:

Es wird das folgende textile Flächengebilde aufgebaut:
- 1. Lage: Geschnittene Glasfasern mit einer Feinheit von 2400 tex und einem Flächengewicht von 162 g/m² (A).
- 2. Lage: Hybridgewebe aus Polypropylenfasern und Glasfasern (Twintex PP 60 660 T 02 der Firma Vetrotex) mit einem Flächengewicht von 660 g/m² davon 396 g/m² Glasanteil und 264 g/m² Polypropylenfasern (B).
- 3. Lage: Geschnittene Glasfasern mit einer Feinheit von 2400 tex und einem Flächengewicht von 162 g/m² (C=A).

Dieses textile Flächengebilde wird durch eine Nadelmaschine geführt und mit einer Einstichzahl von 50 Einstichen/cm² bei einer Einstichtiefe von 9 mm und einem Durchgang von 11 mm zusammengenadelt. Der Vorschub betrug 11 mm/Hub.

Es entsteht ein Flächengebilde mit 984 g/m² Flächengewicht davon 720 g/m² Glasfasern und einer Lagenabfolge A/B/C (C=A). Der Anteil der Fasergewebelage B am Gesamtflächengebilde beträgt 67 %, der Anteil des Glasgewebes bezogen auf den Gesamtglasgehalt 55 %.

Zwei solcher Flächengebilde werden dann zwischen 3 Schmelzeschichten aus Polypropylen, die aus einem Extruder über Breitschlitzdüsen verteilt werden geführt, in der Heizpreßzone einer Doppelbandpresse getränkt und anschließend unter Druck durch Abkühlung fixiert. Das Halbzeug ist 2,5 mm dick und hat einen Glasgehalt von 45 Gew.-% und ein Gesamtflächengewicht von 3200 g/m².

## Patentansprüche

1. Biegesteifer, flächiger Verbundwerkstoff mit einer Dicke von 1,2 bis 5 mm, bestehend aus einer durchgehenden Thermoplastmatrix und mehreren Schichten Verstärkungsfasern, wobei das Gewichtsverhältnis Thermoplastmatrix zu Verstärkungsfasern 80:20 bis 35:65 beträgt, **dadurch gekennzeichnet, daß** die Verstärkungsfasern in der Schichtenfolge
A B C C B A
angeordnet sind, wobei die Schichten A und C aus Glasfasermatten und die Schichten B aus Pasergewebe bestehen, die beiden Schichtenfolgen A B C jeweils für sich zusammengenadelt sind, und die Fasergewebe B ein Flächengewicht von 100 bis 1200 g·m⁻² und die Glasfasermatten A und C ein Flächengewicht von 50 bis 800 g·m⁻² aufweisen.

2. Verbundwerkstoff nach Anspruch 1, **dadurch gekennzeichnet, daß** die Faserschichten A und C identisch sind.

3. Verbundwerkstoff nach Anspruch 1, **dadurch gekennzeichnet, daß** an den Außenseiten der Schichten A weitere Schichten X und X' angeordnet sind, die aus Glasfaservliesen bestehen.

4. Verbundwerkstoff nach Anspruch 3, **dadurch gekennzeichnet, daß** die Glasfaservliese X und X' ein Flächengewicht von 10 bis 50 g·m⁻² aufweisen.

5. Verbundwerkstoffe nach Anspruch 1, **dadurch gekennzeichnet, daß** der Thermoplast Polypropylen ist.

6. Verbundwerkstoffe nach Anspruch 1, **dadurch gekennzeichnet, daß** die Fasergewebe B Hybridgewebe aus Glasfasern und Thermoplastfasern sind.

7. verbundwerkstoffe nach Anspruch 1, **dadurch gekennzeichnet, daß** die Fasergewebe B Glasfasergewebe sind.

8. Verwendung der Verbundwerkstoffe nach Anspruch 1 zur Herstellung von Automobilteilen.

## Claims

1. Bending-resistant, laminar composite material with a thickness of 1.2 to 5 mm consisting of a continuous thermoplastic matrix and several layers of reinforcing fibres, whereby the weight ratio of thermoplastic matrix to reinforcing fibres amounts to 80:20 to 35:65,
**characterised in that** the reinforcing fibres are arranged in the layer sequence
A B C C B A
whereby the layers A and C consist of glass fibre mats and and the layers B of fibre fabric, the two layer sequences A B C are each needled together and the fibre fabric B has a weight per unit surface area of 100 to 1200 g·M⁻² and the glass fibre mats A and C have a weight per unit surface area of 50 to 800 g·m⁻².

2. Composite material according to claim I, **characterised in that** the fibre layers A and C are identical.

3. Composite material according to claim 1, **characterised in that** on the outer sides of the layers A are arranged further layers X and X' which consist of glass fibre fleece.

4. Composite material according to claim 3, **characterised in that** the glass fibre fleece X and X' have a weight per unit surface area of 10 to 50 g·m⁻².

5. Composite materials according to claim 1, **characterised in that** the thermoplastic is polypropylene.

6. Composite materials according to claim 1, **characterised in that** the fibre fabrics B are hybrid fabrics of glass fibres and thermoplastic fibres.

7. Composite materials according to claim 1, **characterised in that** the fibre fabrics B are glass fibre fabrics.

8. Use of composite materials according to claim 1 for the production of automobile parts.

## Revendications

1. Matériau composite plat, résistant en flexion, d'une épaisseur de 1,2 à 5 mm, constitué d'une matrice thermoplastique continue et de plusieurs couches de fibres de renfort, le rapport pondéral entre la matrice thermoplastique et les fibres de renfort étant compris entre 80:20 et 35:65, **caractérisé en ce que** les fibres de renfort sont disposées dans la succession
A B C C B A,
les couches A et C étant constituées de mats de fibres de verre et les couches B de tissu de fibres, les deux successions de couches A B C étant chacune assemblées séparément par aiguilletage et les tissus de fibres B présentent un poids par unité de surface de 100 à 1200 g.m⁻², les mats de fibres de verre A et C présentant un poids par unité de surface de 50 à 800 g.m⁻².

2. Matériau composite selon la revendication 1, **caractérisé en ce que** les couches de fibres A et C sont identiques.

3. Matériau composite selon la revendication 1, **caractérisé en ce que** d'autres couches X et X' qui sont constituées de feutres de fibres de verre sont disposées sur le côté extérieur des couches A.

4. Matériau composite selon la revendication 3, **caractérisé en ce que** les feutres de fibres de verre X et X' présentent un poids par unité de surface de 10 à 50 g.m⁻².

5. Matériau composite selon la revendication 1, **caractérisé en ce que** le thermoplastique est le polypropylène.

6. Matériau composite selon la revendication 1, **caractérisé en ce que** les tissus de fibres B sont des tissus hybrides de fibres de verre et de fibres de thermoplastique.

7. Matériau composite selon la revendication 1, **caractérisé en ce que** les tissus de fibres B sont des tissus de fibres de verre.

8. Utilisation des matériaux composites selon la revendication 1 pour la fabrication de pièces d'automobiles.
